# EUROPÄISCHE PATENTSCHRIFT

(11) **EP 3 718 090 B1**
(45) Veröffentlichungstag und Bekanntmachung des Hinweises auf die Patenterteilung: **12.05.2021**
(21) Anmeldenummer: 19735538.1
(22) Anmeldetag: 01.07.2019
(51) Int. Cl.: G07C 5/00, G07C 5/08

(54) **VERFAHREN ZUM ERMITTELN EINES KOMPONENTENVERHALTENS ZUMINDEST EINER FAHRZEUGKOMPONENTE EINES KRAFTFAHRZEUGS SOWIE KRAFTFAHRZEUG**
METHOD FOR DETERMINING COMPONENT BEHAVIOR OF AT LEAST ONE VEHICLE COMPONENT OF A MOTOR VEHICLE AND MOTOR VEHICLE
PROCÉDÉ PERMETTANT DE DÉTERMINER UN COMPORTEMENT D'AU MOINS UN COMPOSANT D'UN VÉHICULE AUTOMOBILE ET VÉHICULE AUTOMOBILE

(30) Priorität: 04.07.2018 DE 102018210955
(43) Veröffentlichungstag der Anmeldung: 07.10.2020
(73) Patentinhaber: Audi AG, 85045 Ingolstadt (DE)
(72) Erfinder: ERNST, Sebastian, 85049 Ingolstadt (DE); BAUM, Steffen, 85051 Ingolstadt (DE); WESEMEYER, Daniel, 92342 Freystadt (DE)
(86) Internationale Anmeldenummer: PCT/EP2019/067507
(87) Internationale Veröffentlichungsnummer: WO 2020/007755

(56) Entgegenhaltungen:
- EP-A1- 2 912 856
- DE-A1- 10 020 977
- US-A1- 2015 310 742

## Beschreibung

Die Erfindung betrifft ein Verfahren zum Ermitteln eines Komponentenverhaltens zumindest einer Fahrzeugkomponente eines Kraftfahrzeugs. Des Weiteren betrifft die Erfindung ein Kraftfahrzeug.

Es ist bekannt, in einem Fahrzeug Fahrzeugdaten, wie beispielsweise Betriebsdaten einer Fahrzeugkomponente, aufzuzeichnen und zu einer Auswertung oder zu einer Auslegung eines Verhaltens der Fahrzeugkomponente in einer realen Fahrzeugnutzungsumgebung heranzuziehen. Dabei kann die Auswertung oder die Auslegung außerhalb des Fahrzeugs beispielsweise durch eine externe Servervorrichtung ausgeführt werden. Hierzu werden fahrzeugextern Datenbanken mit den aufgezeichneten Fahrzeugdaten angelegt.

In derzeitiger Rechtslage dürfen die Fahrzeugdaten in der fahrzeugexternen Datenbank lediglich anonym erhoben werden. Somit darf kein Bezug zu einer bestimmten Person oder zu einem bestimmten Fahrzeug wie beispielsweise über eine spezifische Fahrgestellnummer oder eine spezifische Seriennummer über die gespeicherten Daten erstellt werden.

Um die Datenerhebung anonym zu gestalten, ist beispielsweise bekannt, ein zeitlich wechselndes Kennzeichen zu benutzen, welches sich nach einer vorbestimmten Zeitdauer ändert. Die Fahrzeugdaten werden dann in Bezug zu dem wechselnden Kennzeichen erhoben. Somit können lediglich Daten innerhalb eines Zeitfensters, bevor die vorbestimmte Zeitdauer abgelaufen ist, zueinander zugeordnet werden. Es ist jedoch nicht möglich, einen Bezug zwischen einem ersten Datensatz, welcher mit einem ersten Kennzeichen gespeichert wurde, und einem zweiten Datensatz, welcher mit einem zweiten Kennzeichen gespeichert wurde, zu erstellen, auch wenn die beiden Datensätze einer gleichen Fahrzeugkomponente zugehörig sind. Somit können bei der Auswertung der Fahrzeugdaten wertvolle Informationen verloren gehen, wie beispielsweise das Verhalten der Fahrzeugkomponente über einen längeren Zeitraum hinweg.

In diesem Zusammenhang beschreibt die DE 10 2006 030 046 A1 ein Verfahren zur Überwachung und Verwaltung von Komponenten und komponentenbezogenen Informationen für Komponenten eines Antriebsstrangs eines Kraftfahrzeugs. Hierzu wird an der zu überwachende Komponente ein Identifikationsmerkmal eingebracht, wie beispielsweise ein sogenannter RFID-Sticker. Nach dem Einbau der Komponente in das Fahrzeug erkennt eine Fahrzeugelektronik beispielsweise über eine RFID Antenne das Identifikationsmerkmal. Somit werden zu überwachende Daten zusammen mit diesem Identifikationsmerkmal gespeichert.

Aus der DE 10 2013 220 453 A1 ist weiterhin ein Verfahren zum Betreiben eines Kraftfahrzeugs bekannt, bei dem während einer Betriebsdauer des Kraftfahrzeugs ein zeitlicher Verlauf einer Betriebsgröße in einem Erfassungszeitraum erfasst wird. Der erfasste zeitliche Verlauf wird mit einer Identifikation, welche einen Fahrzeugtyp und/oder einen Fahrzeugkomponententyp eindeutig identifiziert, versendet.

Aus der DE 10 2008 032 094 A1 ist ein Verfahren zur Komponentenerfassung durch ein Fahrzeug bekannt. Hierzu sind in einem Fahrzeug eine Mehrzahl von Fahrzeugkomponenten mit Eigenidentifikationsdaten angeordnet. Die Fahrzeugkomponenten sind mit einer sogenannten RFID-Schaltung ausgestattet. Ein zentrales Steuergerät des Fahrzeugs ist dazu eingerichtet, die Eigenidentifikationsdaten der Fahrzeugkomponenten zu erfassen, dauerhaft zu speichern und zur Diagnostik bei Wartung und Instandsetzung zur Verfügung zu stellen.

Nachteilig bei den benannten Verfahren ist, dass eine vollständige anonyme Datenerhebung nicht garantiert werden kann. So besteht die Möglichkeit, eine Zuordnung beispielsweise des RFID-Stickers zu der Fahrzeugkomponente und zu einem bestimmten Fahrzeug, indem die Fahrzeugkomponente eingebaut wurde, zu erstellen. Die Erfassung der Fahrzeugdaten droht somit nicht mehr anonym zu erfolgen.

Die US 2015/310742 A1 offenbart eine fahrzeugseitige Verarbeitungs- und Kommunikationseinheit, welche dazu eingerichtet ist, Sensordaten enthaltende Nachrichten zu versenden, wobei den Nachrichten ein Zufallscode zugefügt wird, der das Fahrzeug identifiziert, während die Fahrzeuganonymität gewahrt wird. Der Zufallscode wird bevorzugt einmal generiert, beispielsweise bei der Inbetriebsetzung der Verarbeitungs- und Kommunikationseinheit, und bleibt danach unverändert.

Die EP 2 912 856 A1 betrifft ein System zur automatisierten Erfassung von Telemetriedaten, bei dem einer fahrzeugseitigen Datenerfassungs-/Übermittlungseinrichtung bei der Integration in das System eine eindeutige Identifikation nach dem Zufallsprinzip zugeordnet wird.

Aufgabe der vorliegenden Erfindung ist es, ein Verfahren zu schaffen, welches eine anonyme Datenerhebung von gesammelten Daten einer im Kraftfahrzeug angeordneten Fahrzeugkomponente ermöglicht, mittels welcher eine anonyme Datenanalyse der gesammelten Daten durchgeführt werden kann.

Diese Aufgabe wird durch die Gegenstände der unabhängigen Patentansprüche gelöst. Vorteilhafte Weiterbildungen der Erfindung sind durch die Unteransprüche, die folgende Beschreibung und die Figuren offenbart.

Die vorliegende Erfindung basiert auf der Erkenntnis, dass Betriebsdaten einer Fahrzeugkomponente eines Kraftfahrzeugs insbesondere dann anonym erfasst werden, wenn der Fahrzeugkomponente ein Kennzeichen zugeordnet ist, welches zufällig gewählt und fahrzeugintern erstmalig erzeugt wird. Somit kann das Kennzeichen außerhalb eines kraftfahrzeuginternen Steuerungssystems nicht bekannt sein.

Um eine anonyme Datenerhebung von Fahrzeugkomponenten-bezogenen Daten im Kraftfahrzeug zu ermöglichen, wird das im Folgenden beschriebene Verfahren geschaffen. Das Verfahren zum Ermitteln eines Komponentenverhaltens zumindest einer Fahrzeugkomponente eines Kraftfahrzeugs sieht in einem ersten Verfahrensschritt vor, dass eine erstmalige Inbetriebnahme der zumindest einen Fahrzeugkomponente des Kraftfahrzeugs erfasst wird. Eine erstmalige Inbetriebnahme kann dann erfolgen, wenn die jeweilige Fahrzeugkomponente zum ersten Mal angeschaltet und/oder angesteuert wird. Dies kann zeitnah nach einem Einbau der Fahrzeugkomponente in das Kraftfahrzeug erfolgen, wie beispielsweise sobald eine Produktion des Kraftfahrzeugs fertig gestellt wird. Eine erstmalige Inbetriebnahme kann aber auch erst erfolgen, wenn eine vorbestimmte Zeitdauer nach Fertigstellung der Produktion des Kraftfahrzeugs abgelaufen ist. Die vorbestimmte Zeitdauer beträgt beispielsweise mindestens 10 Stunden oder mindestens 24 Stunden. Die zumindest eine Fahrzeugkomponente kann beispielsweise als ein Steuergerät oder als eine Leistungselektronik-Einrichtung des Kraftfahrzeugs ausgebildet sein.

In einem zweiten Verfahrensschritt wird nach Erfassung der erstmaligen Inbetriebnahme der jeweiligen Fahrzeugkomponente ein der jeweiligen Fahrzeugkomponente zugeordnetes Komponenten-Kennzeichen erstellt. Die Erfassung der erstmaligen Inbetriebnahme kann die Erstellung des Komponenten-Kennzeichens auslösen. Das Komponenten-Kennzeichen umfasst eine Abfolge einer vorbestimmten Anzahl an Zeichen, wobei jedes Zeichen mittels eines Zufallsgenerators erzeugt wird. Das Kennzeichen kann beispielsweise ein Code oder eine Identifikationsnummer sein. Die Zeichen können als Schriftzeichen oder als numerische Zeichen oder als Sonderzeichen oder als eine Kombination der genannten Zeichen ausgebildet sein. Das Komponenten-Kennzeichen kann dann beispielsweise als eine Abfolge von einer vorbestimmten Anzahl an Zufallszahlen ausgebildet sein. Die jeweilige Fahrzeugkomponente kann hierzu einen eigenen Zufallsgenerator aufweisen oder es kann ein zentraler fahrzeuginterner Zufallsgenerator im Kraftfahrzeug vorgesehen sein.

Die vorbestimmte Anzahl an Zeichen kann derart gewählt sein, dass eine Wahrscheinlichkeit, dass unabhängig von der jeweiligen Fahrzeugkomponente und/oder unabhängig von dem Kraftfahrzeug eine zweimalige Generierung desselben Komponenten-Kennzeichens sehr gering wird. Beispielsweise beträgt die vorbestimmte Anzahl an Zeichen mindestens 15. Die vorbestimmte Anzahl an Zeichen kann aber auch alternativ derart gewählt sein, dass die Wahrscheinlichkeit, dass dasselbe Komponenten-Kennzeichen an zwei verschiedene Fahrzeugkomponenten vergeben wird, bedeutsam ist, sodass rückwirkend nicht eindeutig bestimmbar ist, zu welchem Kraftfahrzeug und/oder zu welcher Fahrzeugkomponente das Komponenten-Kennzeichen zugeordnet ist. Hierbei kann die benötigte Wahrscheinlichkeit und die sich daraus ergebende Anzahl an Zeichen aus Angaben aus der aktuellen Gesetzeslage ermittelt werden.

Das erfindungsgemäße Verfahren sieht weiterhin die im Folgenden beschriebenen Verfahrensschritte vor. Ein weiterer Verfahrensschritt umfasst ein Erstellen eines dem Kraftfahrzeug zugeordneten Kraftfahrzeug-Kennzeichens nach der erstmaligen Inbetriebnahme der jeweiligen Fahrzeugkomponente des Kraftfahrzeugs. Das Kraftfahrzeug-Kennzeichen umfasst eine Abfolge einer vorbestimmten Anzahl an Zeichen, welche durch den Zufallsgenerator erzeugt werden. Die Zeichen können ebenfalls wie die Zeichen des Komponenten-Kennzeichens als Schriftzeichen oder als numerische Zeichen oder als Sonderzeichen oder als eine Kombination der genannten Zeichen ausgebildet sein.

In einem weiteren Verfahrensschritt werden Betriebsdaten der jeweiligen Fahrzeugkomponente gesammelt. Hierzu kann zumindest eine vorbestimmte Messgröße durch eine entsprechende Messeinrichtung gemessen werden. Beispielsweise werden durch die Betriebsdaten ein Nutzungsverhalten und/oder eine Betriebstemperatur und/oder eine Betriebsleistung der jeweiligen Komponente erfasst. Die Betriebsdaten können über die Dauer eines Betriebs der Fahrzeugkomponente hinweg in Realzeit erfasst werden. In einer fahrzeuginternen Speichereinrichtung können die gesammelten Betriebsdaten gespeichert oder zwischengespeichert werden. Die gesammelten Betriebsdaten der jeweiligen Fahrzeugkomponente werden dem Komponenten-Kennzeichen der jeweiligen Fahrzeugkomponente zugeordnet. Beispielsweise werden die gesammelten Betriebsdaten zusammen mit dem zugeordneten Komponenten-Kennzeichen abgespeichert.

Alle Betriebsdaten der im Kraftfahrzeug angeordneten Fahrzeugkomponenten werden dem Kraftfahrzeug-Kennzeichen zugeordnet. Somit umfasst ein Datensatz der Betriebsdaten ein bestimmtes zugeordnetes Komponenten-Kennzeichen sowie das zugeordnete Kraftfahrzeug-Kennzeichen.

In einem weiteren Verfahrensschritt wird das Komponentenverhalten der jeweiligen Fahrzeugkomponente basierend auf den dem jeweiligen Komponenten-Kennzeichen zugeordneten Betriebsdaten ermittelt. Das Komponentenverhalten wird in einem weiteren Verfahrensschritt weiterhin basierend auf den dem jeweiligen Kraftfahrzeug-Kennzeichen zugeordneten Betriebsdaten ermittelt. Zum Ermitteln des Komponentenverhaltens ist fahrzeugextern eine Auswerteeinrichtung vorgesehen, die beispielsweise als eine zentrale Servereinrichtung ausgebildet ist. Die gesammelten Betriebsdaten werden dann zusammen mit dem zugeordneten Komponenten-Kennzeichen an die zentrale Servereinrichtung gesendet. Erfindungsgemäß ist vorgesehen, dass bei einem Versenden der gesammelten Betriebsdaten der jeweiligen Fahrzeugkomponente zusammen mit einem spezifischen Kennzeichen der jeweiligen Fahrzeugkomponente an die fahrzeugexterne Servereinrichtung ausschließlich das der jeweiligen Fahrzeugkomponente zugeordnete Komponenten-Kennzeichen als das spezifische Kennzeichen sowie das dem Kraftfahrzeug zugeordnete Kraftfahrzeug-Kennzeichen verwendet wird.

Die zentrale Servereinrichtung kann eine Datenbank umfassen, in welcher die gesendeten Betriebsdaten zusammen mit dem zugeordneten Komponenten-Kennzeichen gespeichert werden. Die fahrzeuginterne gesammelten Betriebsdaten der jeweiligen Fahrzeugkomponente können zu vorbestimmten Zeitpunkten oder in vorbestimmten Zeitabständen an die zentrale Servereinrichtung ausgesendet werden. Die zentrale Servereinrichtung kann zudem von weiteren Fahrzeug-Komponenten desselben Kraftfahrzeugs und/oder eines weiteren Kraftfahrzeugs Betriebsdaten mit jeweiligen Komponenten-Kennzeichen empfangen. Zum Ermitteln des Komponentenverhaltens werden in der Auswerteeinrichtung dann diejenigen Betriebsdaten zueinander zugeordnet, welche das gleiche Komponenten-Kennzeichen aufweisen.

Als Komponentenverhalten kann eine Betriebsleistung und/oder ein Betriebszustand und/oder ein Verwendungsmuster und/oder ein Nutzungsverhalten der jeweiligen Fahrzeugkomponente des Kraftfahrzeugs ermittelt werden. Hieraus kann beispielsweise ein Lastenheft der Fahrzeugkomponente optimiert werden und/oder eine prädiktive Schadenserkennung der Fahrzeugkomponente ermittelt werden.

Das erfindungsgemäße Verfahren ermöglicht in vorteilhafter Weise, dass die fahrzeugextern gespeicherten Betriebsdaten anonym erhoben werden, da eine Zuordnung der Betriebsdaten zu einem bestimmten Kraftfahrzeug oder zu einem bestimmten Benutzer des Kraftfahrzeugs verhindert wird. Dadurch, dass lediglich ein durch einen Zufallsgenerator nach Einbau der Fahrzeugkomponente generiertes Komponenten-Kennzeichen sowie das durch einen Zufallsgenerator generierte dem Kraftfahrzeug zugeordnete Kraftfahrzeug-Kennzeichen fahrzeugextern kommuniziert wird, kann die Herkunft der zugeordneten Betriebsdaten nicht auf ein bestimmtes Kraftfahrzeug oder auf eine bestimmte Fahrzeugkomponente zurückgeführt werden. Es können jedoch Zuordnungen einzelner Datensätze der Betriebsdaten zueinander ausgeführt werden, auch wenn die einzelnen Datensätze zu unterschiedlichen Zeitpunkten erhoben wurden. Somit ergibt sich der Vorteil, dass insgesamt eine anonyme Datenanalyse von fahrzeugintern erhobenen Daten ermöglicht wird. Sind in dem Kraftfahrzeug mehrere Fahrzeugkomponenten verbaut, kann das Komponentenverhalten einer einzelnen Fahrzeugkomponente auch mittels Betriebsdaten der weiteren Fahrzeugkomponenten des Kraftfahrzeugs ermittelt werden. Eine Verknüpfung einzelner Datensätze der verschiedenen Fahrzeugkomponenten des Kraftfahrzeugs ist somit beispielsweise in der zentralen Servereinrichtung möglich. In vorteilhafter Weise ist die Erhebung der Betriebsdaten weiterhin anonym, da kein Bezug zu einer Fahrgestellnummer oder einer Seriennummer des Kraftfahrzeugs hergestellt werden kann.

Die Erfindung umfasst auch Weiterbildungen des erfindungsgemäßen Verfahrens, durch die sich zusätzliche Vorteile ergeben. Die Erfindung umfasst auch die Kombinationen der Merkmale der beschriebenen Ausführungsformen.

Eine Ausführungsform sieht vor, dass das Komponenten-Kennzeichen einer jeweiligen Fahrzeugkomponente unabhängig einer weiteren Inbetriebnahme der jeweiligen Fahrzeugkomponente unverändert der jeweiligen Fahrzeugkomponente zugeordnet bleibt. Das Komponenten-Kennzeichen kann dann insbesondere über eine gesamte Lebensdauer der jeweiligen Fahrzeugkomponente hinweg dieser zugeordnet bleiben. Mit anderen Worten wird ein Komponenten-Kennzeichen einmalig für die jeweilige Fahrzeugkomponente erstellt. Somit kann sichergestellt werden, dass über große Zeiträume hinweg gesammelte Betriebsdaten, wie beispielsweise über mehrere Monate und/oder mehrere Jahre, zueinander zugeordnet werden können. Somit kann das Komponentenverhalten der jeweiligen Fahrzeugkomponente in vorteilhafter Weise über einen langen Zeitraum hinweg analysiert werden und beispielsweise eine drohende Verschlechterung der Komponentenleistung festgestellt werden.

Bevorzugt bleibt das Kraftfahrzeug-Kennzeichen unabhängig einer Inbetriebnahme einer weiteren Fahrzeugkomponente und/oder unabhängig eines Abstellens des Kraftfahrzeugs und/oder unabhängig einer erneuten Inbetriebnahme des Kraftfahrzeugs unverändert dem Kraftfahrzeug zugeordnet. Insbesondere ist das Kraftfahrzeug-Kennzeichen über eine gesamte Lebensdauer des Kraftfahrzeugs hinweg unverändert dem Kraftfahrzeug zugeordnet. Mit anderen Worten wird das Kraftfahrzeug-Kennzeichen einmalig erstellt. Die einmalige Erstellung des Kraftfahrzeug-Kennzeichens kann durch die erstmalige Inbetriebnahme des Kraftfahrzeugs erfolgen und/oder durch die erstmalige Inbetriebnahme einer ersten Fahrzeugkomponente des Kraftfahrzeugs. Somit kann in vorteilhafter Weise ein Ermitteln von einem Komponentenverhalten einer Fahrzeugkomponente in Bezug auf dasselbe Kraftfahrzeug unabhängig eines Einbaus und/oder eines Ausbaus weiterer Fahrzeugkomponenten des Kraftfahrzeugs erfolgen. Insbesondere kann dann bei einem Austausch der jeweiligen Fahrzeugkomponente ein Komponentenverhalten der neu eingebauten Fahrzeugkomponente in Bezug auf dasselbe Kraftfahrzeug ermittelt werden.

In einer alternativen Ausführungsform hierzu wird das Kraftfahrzeug-Kennzeichen mit jeder erstmaligen Inbetriebnahme einer weiteren Fahrzeugkomponente neu erstellt. Mit anderen Worten wird mit jeder neuen Konfiguration an Fahrzeugkomponenten eines Kraftfahrzeugs das Kraftfahrzeug-Kennzeichen neu erstellt. Das Kraftfahrzeug-Kennzeichen ändert sich somit mit jedem Einbau und/oder Ausbau einer Fahrzeugkomponente des Kraftfahrzeugs. Somit wird es in vorteilhafter Weise möglich, ein Komponentenverhalten einer Fahrzeugkomponente in Bezug auf eine Fahrzeugkonfiguration des Kraftfahrzeugs zu ermitteln.

Die beschriebene Fahrzeugkomponente eines Kraftfahrzeugs ist dazu eingerichtet, eine erstmalige Inbetriebnahme der Fahrzeugkomponente zu erfassen. Hierzu kann die Fahrzeugkomponente eine Erfassungseinrichtung aufweisen. Die Fahrzeugkomponente ist weiterhin dazu eingerichtet, ein Komponenten-Kennzeichen zu erstellen, welches eine vorbestimmte Anzahl an Zeichen umfasst. Hierzu weist die Fahrzeugkomponente einen Zufallsgenerator auf, welcher dazu eingerichtet ist, jedes Zeichen des Komponenten-Kennzeichens zu erzeugen. Die Fahrzeugkomponente ist weiterhin dazu eingerichtet, Betriebsdaten der Fahrzeugkomponente zu erfassen und die erfassten Betriebsdaten zu dem erstellten Komponenten-Kennzeichen zuzuordnen.

Eine bevorzugte Ausführungsform der Fahrzeugkomponente sieht vor, dass die Fahrzeugkomponente eine Sendeeinrichtung umfasst, welche dazu eingerichtet ist, bei einem Versenden der Betriebsdaten zusammen mit einem spezifischen Kennzeichen der Fahrzeugkomponente ausschließlich das zugeordnete Komponenten-Kennzeichen als das spezifische Kennzeichen zu verwenden. Somit kann ein Versenden eines nicht-anonymen Kennzeichens ausgeschlossen werden.

Zu der Beschreibung gehören auch Weiterbildungen der beschriebenen Fahrzeugkomponente, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der beschriebenen Fahrzeugkomponente hier nicht noch einmal beschrieben.

Das erfindungsgemäße Kraftfahrzeug ist in Anspruch 6 definiert.

Zu der Beschreibung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens und mit den Weiterbildungen der beschriebenen Fahrzeugkomponente beschrieben worden sind. Aus diesem Grund sind die entsprechenden Weiterbildungen des erfindungsgemäßen Kraftfahrzeugs hier nicht noch einmal beschrieben.

Im Folgenden sind Ausführungsbeispiele der Erfindung beschrieben. Hierzu zeigen:
- Fig. 1: ein Diagramm, welches schematisch die Verfahrensschritte für ein Verfahren zum Ermitteln eines Komponentenverhaltens zumindest einer Fahrzeugkomponente eines Kraftfahrzeugs zeigt;
- Fig. 2: eine schematische Darstellung eines Kraftfahrzeugs mit drei Fahrzeugkomponenten; und
- Fig. 3: eine schematische Darstellung von fahrzeugextern gespeicherten Betriebsdaten über die Fahrzeugkomponenten des Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

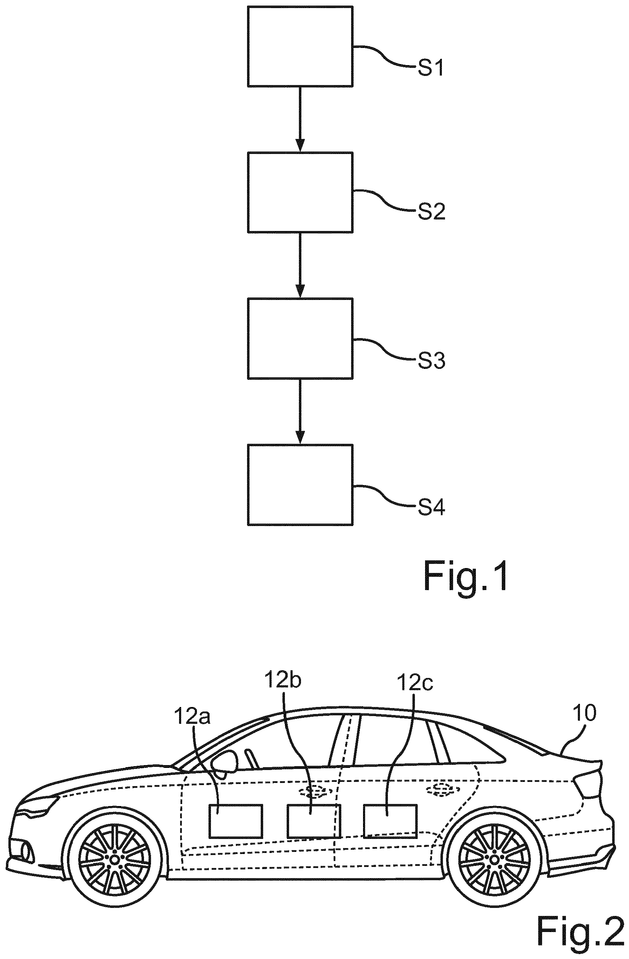

Fig. 1 zeigt schematisch ein Diagramm, welches die Verfahrensschritte für ein Verfahren zum Ermitteln eines Komponentenverhaltens zumindest einer Fahrzeugkomponente eines Kraftfahrzeugs aufführt.

In Fig. 2 ist das Kraftfahrzeug 10 schematisch dargestellt. Das Kraftfahrzeug 10 weist hier dargestellt drei Fahrzeugkomponenten 12a, 12b und 12c auf. Das Kraftfahrzeug 10 kann aber auch lediglich nur eine Fahrzeugkomponente oder mehrere Fahrzeugkomponenten aufweisen. Zumindest eine der Fahrzeugkomponenten 12a, 12b, 12c kann als ein Steuergerät und/oder als eine Leistungselektronik-Einrichtung und/oder als eine Antriebskomponente des Kraftfahrzeugs 10 ausgebildet sein. Durch das in Fig. 1 dargestellte Verfahren werden im Kraftfahrzeug 10 Betriebsdaten der einzelnen Fahrzeugkomponenten 12a, 12b, 12c erfasst und für eine fahrzeugexterne Auswertung bereitgestellt. Das Kraftfahrzeug 10 oder die einzelnen Fahrzeugkomponenten 12a, 12b, 12c sind dazu eingerichtet, eine Kommunikationsverbindung mit einer zentralen Servereinrichtung aufzubauen und über diese Kommunikationsverbindung die erfassten Betriebsdaten der einzelnen Fahrzeugkomponenten 12a, 12b, 12c zu versenden. Die fahrzeugexterne Servereinrichtung ermittelt mittels der Betriebsdaten ein jeweiliges Komponentenverhalten der einzelnen Fahrzeugkomponenten 12a, 12b, 12c des Kraftfahrzeugs 10. Die fahrzeugexterne Servereinrichtung kann weiterhin von weiteren Kraftfahrzeugen Betriebsdaten empfangen und von Fahrzeugkomponenten dieser weiteren Kraftfahrzeugen das jeweilige Komponentenverhalten ermitteln. Ein Komponentenverhalten kann beispielsweise eine Komponentenleistung oder ein Nutzungsverhalten der Fahrzeugkomponente 12a, 12b, 12c sein. Hierzu kann ein Betriebsmuster und/oder ein Nutzungsmuster der einzelnen Fahrzeugkomponente 12a, 12b, 12c mittels der Betriebsdaten ermittelt werden.

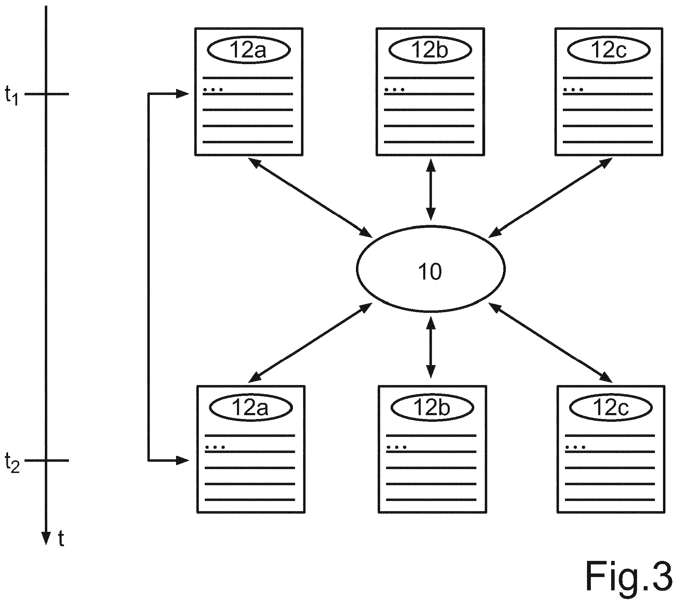

In Fig. 3 ist hierzu schematisch dargestellt, wie die Betriebsdaten in der zentralen Servereinrichtung erhoben werden. Im Folgenden wird das in Fig. 1 dargestellte Verfahren in Zusammenschau mit den Figuren 2 und 3 erläutert.

Das Verfahren zum Ermitteln des jeweiligen Komponentenverhaltens der einzelnen Fahrzeugkomponenten 12a, 12b, 12c des Kraftfahrzeugs 10 umfasst einen ersten Verfahrensschritt S1, bei welchem eine erstmalige Inbetriebnahme zumindest einer der drei Fahrzeugkomponenten 12a, 12b, 12c des Kraftfahrzeugs 10 erfasst wird. Die Erfassung dieser Inbetriebnahme löst einen zweiten Verfahrensschritt S2 aus, bei welchem ein Komponenten-Kennzeichen für die zumindest eine in Betrieb genommene Fahrzeugkomponente 12a, 12b, 12c mittels eines Zufallsgenerators erstellt wird. Das Komponenten-Kennzeichen ist beispielsweise eine Identifikationsnummer oder ein Code mit einer Abfolge an Zeichen, wie alphanumerische Zeichen oder Sonderzeichen.

Gleichzeitig löst die erstmalige Inbetriebnahme zumindest einer der drei Fahrzeugkomponenten 12a, 12b, 12c ein Erstellen eines Kraftfahrzeug-Kennzeichens aus, welches ebenfalls mittels des Zufallsgenerators erstellt wird. Das Kraftfahrzeug-Kennzeichen in einer nicht beanspruchten Alternative kann aber auch fahrzeugextern wie beispielsweise in der zentralen Servereinrichtung mittels eines weiteren Zufallsgenerators erstellt werden.

Das Komponenten-Kennzeichen bzw. das Kraftfahrzeug-Kennzeichen ist der jeweiligen erstmalig in Betrieb genommenen Fahrzeugkomponente 12a, 12b, 12c bzw. dem Kraftfahrzeug 10 zugeordnet. Unabhängig einer weiteren Inbetriebnahme derselben Fahrzeugkomponente 12a, 12b, 12c bleibt das Komponenten-Kennzeichen der jeweiligen Fahrzeugkomponente 12a, 12b, 12c unverändert zugeordnet. Auch das Kraftfahrzeug-Kennzeichen kann unverändert einer weiteren erstmaligen Inbetriebnahme einer weiteren Fahrzeugkomponente 12a, 12b, 12c unverändert dem Kraftfahrzeug 10 zugeordnet bleiben. Das Kraftfahrzeug-Kennzeichen kann aber auch bei jeder weiteren erstmaligen Inbetriebnahme einer weiteren Fahrzeugkomponente 12a, 12b, 12c neu durch den Zufallsgenerator erstellt werden, sodass das Kraftfahrzeug 10 mit jeder unterschiedlichen Konfiguration an eingebauten Fahrzeugkomponenten 12a, 12b, 12c einem unterschiedlichen Kraftfahrzeug-Kennzeichen zugeordnet ist.

In einem dritten Verfahrensschritt S3 werden Betriebsdaten der einzelnen Fahrzeugkomponenten 12a, 12b, 12c des Kraftfahrzeugs 10 gesammelt. Hierzu kann eine Betriebsleistung, ein Nutzungsverhalten, eine Betriebstemperatur und/oder eine Betriebsdauer der jeweiligen Fahrzeugkomponente 12a, 12b, 12c als Betriebsdaten erfasst werden. Die Betriebsdaten werden demjenigen Komponenten-Kennzeichen zugeordnet, welches der Fahrzeugkomponente 12a, 12b, 12c, an der die Betriebsdaten erfasst wurden, zugewiesen ist. Gleichzeitig werden die Betriebsdaten aller Fahrzeugkomponenten 12a, 12b, 12c des Kraftfahrzeugs 10 auch dem Kraftfahrzeug-Kennzeichen zugeordnet. So umfasst jeder Datensatz der Betriebsdaten, der fahrzeugintern erfasst wird, das Komponenten-Kennzeichen und das Kraftfahrzeug-Kennzeichen. Die Betriebsdaten werden somit immer in Bezug zu dem Komponenten-Kennzeichen und/oder zu dem Kraftfahrzeug-Kennzeichen erhoben.

In einem vierten Verfahrensschritt S4 wird das Komponentenverhalten einer jeweiligen Fahrzeugkomponente 12a, 12b, 12c basierend auf den Betriebsdaten, welche der jeweiligen Fahrzeugkomponente 12a, 12b, 12c über das Komponenten-Kennzeichen zugeordnet sind, ermittelt. Dies erfolgt fahrzeugextern in der zentralen Servereinrichtung. Hierzu werden wie in Fig. 3 dargestellt einzelne Datensätze von der jeweiligen Fahrzeugkomponente 12a, 12b, 12c bzw. von dem Kraftfahrzeug 10 empfangen und in eine Datenbank angelegt. Hier dargestellt wird zu einem ersten Zeitpunkt t1, einem Zeitpunkt des Erfassens oder des Empfangens des Datensatzes entspricht, der jeweilige Datensatz mit dem entsprechenden Komponenten-Kennzeichen der jeweiligen Fahrzeugkomponente 12a, 12b, 12c, in der die Betriebsdaten innerhalb des jeweiligen Datensatzes erfasst wurden, gespeichert. Zu einem weiteren Zeitpunkt t2 können weitere Datensätze derselben Fahrzeugkomponente 12a, 12b, 12c erfasst oder empfangen werden. Diese werden ebenfalls mit dem jeweiligen Komponenten-Kennzeichen gespeichert. Weiterhin werden alle Datensätze aller Fahrzeugkomponenten 12a, 12b, 12c des Kraftfahrzeugs 10 mit einer Zuordnung zu dem Kraftfahrzeug-Kennzeichen des Kraftfahrzeugs 10 gespeichert. Somit kann ein Bezug zu zwischen den einzelnen Datensätzen einer jeweiligen Fahrzeugkomponente 12a, 12b, 12c, die zu unterschiedlichen Zeitpunkten t erhoben worden sind zueinander erstellt werden. Gleichzeitig ist aber auch ein Bezug zwischen den einzelnen Datensätzen verschiedener Fahrzeugkomponenten 12a, 12b, 12c über das gemeinsame Kraftfahrzeug-Kennzeichen möglich. Somit kann eine Auswertung eines jeweiligen Komponentenverhaltens einer Fahrzeugkomponente 12a, 12b, 12c in Abhängigkeit von einer Zeit als auch in Abhängigkeit von weiteren Fahrzeugkomponenten 12a, 12b, 12c des Kraftfahrzeugs 10 erfolgen. Da die jeweiligen abgespeicherten Komponenten-Kennzeichen bzw. Kraftfahrzeug-Kennzeichen mittels eines Zufallsgenerators erstellt worden sind, kann kein Bezug der gespeicherten Betriebsdaten bzw. Datensätze zu einer bestimmten Person bzw. einem bestimmten Kraftfahrzeug hergestellt werden. Die Erhebung der Betriebsdaten erfolgt somit anonym.

Insgesamt zeigen die Beispiele, wie durch die Erfindung fahrzeugextern Kraftfahrzeug-bezogene Betriebsdaten in anonymer Art und Weise gespeichert und zu einer Auswertung beispielsweise eines Komponentenverhaltens einer Fahrzeugkomponente eines Kraftfahrzeugs herangezogen werden können.

## Patentansprüche

1. Verfahren zum Ermitteln eines Komponentenverhaltens zumindest einer Fahrzeugkomponente (12a, 12b, 12c) eines Kraftfahrzeugs (10), umfassend die folgenden Schritte:
- Erfassen einer erstmaligen Inbetriebnahme der zumindest einen Fahrzeugkomponente (12a, 12b, 12c) des Kraftfahrzeugs (10) (Schritt S1);
- Nach Erfassung der erstmaligen Inbetriebnahme der jeweiligen Fahrzeugkomponente (12a, 12b, 12c): fahrzeuginternes Erstellen eines zugeordneten Komponenten-Kennzeichens, wobei das Komponenten-Kennzeichen eine Abfolge einer vorbestimmten Anzahl an Zeichen umfasst, wobei jedes Zeichen mittels eines Zufallsgenerators erzeugt wird (Schritt S2) sowie in einem weiteren Verfahrensschritt fahrzeuginternes Erstellen eines dem Kraftfahrzeug (10) zugeordneten Kraftfahrzeug-Kennzeichens, wobei das Kraftfahrzeug-Kennzeichen eine Abfolge einer vorbestimmten Anzahl an Zeichen umfasst, wobei jedes Zeichen durch einen Zufallsgenerator erzeugt wird;
- Fahrzeuginternes Sammeln von Betriebsdaten der jeweiligen Fahrzeugkomponente (12a, 12b, 12c) und Zuordnen der Betriebsdaten zu dem der jeweiligen Fahrzeugkomponente (12a, 12b, 12c) zugeordneten Komponenten-Kennzeichen (Schritt S3)
- Zuordnen der gesammelten Betriebsdaten jeder Fahrzeugkomponente (12a, 12b, 12c) des Kraftfahrzeugs (10) zu dem Kraftfahrzeug-Kennzeichen; und
- Ermitteln des Komponentenverhaltens der jeweiligen Fahrzeugkomponente (12a, 12b, 12c) basierend auf den dem jeweiligen Komponenten-Kennzeichen zugeordneten Betriebsdaten (Schritt S4) sowie weiterhin basierend auf den dem jeweiligen Kraftfahrzeug-Kennzeichen zugeordneten Betriebsdaten durch eine fahrzeugexterne Auswerteeinrichtung,
- wobei bei einem Versenden der gesammelten Betriebsdaten der jeweiligen Fahrzeugkomponente (12a, 12b, 12c) zusammen mit einem spezifischen Kennzeichen der jeweiligen Fahrzeugkomponente (12a, 12b, 12c) an die fahrzeugexterne Auswertevorrichtung ausschließlich das der jeweiligen Fahrzeugkomponente (12a, 12b, 12c) zugeordnete Komponenten-Kennzeichen als das spezifische Kennzeichen sowie das dem Kraftfahrzeug zugeordnete Kraftfahrzeug-Kennzeichen verwendet wird.

2. Verfahren nach Anspruch 1, wobei das Komponenten-Kennzeichen einer jeweiligen Fahrzeugkomponente (12a, 12b, 12c) unabhängig von einer weiteren Inbetriebnahme der jeweiligen Fahrzeugkomponente (12a, 12b, 12c), insbesondere über eine gesamte Lebensdauer der jeweiligen Fahrzeugkomponente (12a, 12b, 12c), unverändert der jeweiligen Fahrzeugkomponente (12a, 12b, 12c) zugeordnet bleibt.

3. Verfahren nach einem der vorhergehenden Ansprüche, wobei das Kraftfahrzeug-Kennzeichen unabhängig von einer Inbetriebnahme einer weiteren Fahrzeugkomponente (12a, 12b, 12c) und/oder unabhängig von einem Abstellen des Kraftfahrzeugs (10) und/oder unabhängig von einer erneuten Inbetriebnahme des Kraftfahrzeugs (10), insbesondere über eine gesamte Lebensdauer des Kraftfahrzeugs (10), unverändert dem Kraftfahrzeug (10) zugeordnet bleibt.

4. Verfahren nach einem der Ansprüche 1 oder 2, wobei das Kraftfahrzeug-Kennzeichen mit jeder erstmaligen Inbetriebnahme einer weiteren Fahrzeugkomponente (12a, 12b, 12c) neu erstellt wird.

5. Verfahren nach einem der vorhergehenden Ansprüche, wobei als ein Komponentenverhalten eine Betriebsleistung und/oder ein Betriebszustand und/oder ein Verwendungsmuster der jeweiligen Fahrzeugkomponente (12a, 12b, 12c) des Kraftfahrzeugs (10) ermittelt wird.

6. Kraftfahrzeug (10) mit einer Fahrzeugkomponente (12a, 12b, 12c) oder mehreren Fahrzeugkomponenten (12a, 12b, 12c), wobei jede Fahrzeugkomponente (12a, 12b, 12c) dazu eingerichtet ist,
- eine erstmalige Inbetriebnahme der jeweiligen Fahrzeugkomponente (12a, 12b, 12c) zu erfassen;
- ein Komponenten-Kennzeichen zu erstellen, welches eine Abfolge einer vorbestimmten Anzahl an Zeichen umfasst, wobei die Fahrzeugkomponente (12a, 12b, 12c) einen Zufallsgenerator aufweist, welcher dazu eingerichtet ist, jedes Zeichen des Komponenten-Kennzeichens zu erzeugen; und
- Betriebsdaten der Fahrzeugkomponente (12a, 12b, 12c) zu erfassen und die erfassten Betriebsdaten zu dem Komponenten-Kennzeichen zuzuordnen,
- wobei zusätzlich
das Kraftfahrzeug eingerichtet ist, nach der erstmaligen Inbetriebnahme der oder einer der Fahrzeugkomponenten (12a, 12b, 12c) fahrzeugintern ein dem Kraftfahrzeug (10) zugeordnetes Kraftfahrzeug-Kennzeichen zu erstellen, wobei das Kraftfahrzeug-Kennzeichen eine Abfolge einer vorbestimmten Anzahl an Zeichen umfasst, wobei jedes Zeichen durch einen Zufallsgenerator erzeugt wird;
- wobei das Kraftfahrzeug weiterhin dazu eingerichtet ist,
- Betriebsdaten der jeweiligen Fahrzeugkomponente (12a, 12b, 12c) zu sammeln und die gesammelten Betriebsdaten zu dem der jeweiligen Fahrzeugkomponente (12a, 12b, 12c) zugeordneten Komponenten-Kennzeichen (Schritt S3) zuzuordnen, sowie
- die gesammelten Betriebsdaten jeder Fahrzeugkomponente (12a, 12b, 12c) des Kraftfahrzeugs (10) zu dem Kraftfahrzeug-Kennzeichen zuzuordnen; und
- die gesammelten Betriebsdaten der jeweiligen Fahrzeugkomponente (12a, 12b, 12c) zusammen mit einem spezifischen Kennzeichen der jeweiligen Fahrzeugkomponente (12a, 12b, 12c) an eine fahrzeugexterne Auswerteeinrichtung zu senden und beim Versenden ausschließlich das der jeweiligen Fahrzeugkomponente (12a, 12b, 12c) zugeordnete Komponenten-Kennzeichen als das spezifische Kennzeichen sowie das dem Kraftfahrzeug zugeordnete Kraftfahrzeug-Kennzeichen zu verwenden.

## Claims

1. Method for determining a component behaviour of at least one vehicle component (12a, 12b, 12c) of a motor vehicle (10), comprising the following steps:
- recording a first-time start-up of the at least one vehicle component (12a, 12b, 12c) of the motor vehicle (10) (step S1);
- after recording the first-time start-up of the respective vehicle component (12a, 12b, 12c): creating in-vehicle an assigned component-identifier, wherein the component-identifier comprises a sequence of a predetermined number of characters, wherein each character is generated by means of a random generator (step S2) as well as in a further method step creating in-vehicle a motor vehicle-identifier assigned to the motor vehicle (10), wherein the motor vehicle-identifier comprises a sequence of a predetermined number of characters, wherein each character is generated by means of a random generator;
- collecting in-vehicle operational data of the respective vehicle component (12a, 12b, 12c) and assigning the operational data to the component-identifier assigned to the respective vehicle component (12a, 12b, 12c) (step S3)
- assigning the collected operational data of each vehicle component (12a, 12b, 12c) of the motor vehicle (10) to the motor vehicle-identifier; and
- determining the component behaviour of the respective vehicle component (12a, 12b, 12c) based on the operational data assigned to the respective component-identifier (step S4) and furthermore based on the operational data assigned to the respective motor vehicle-identifier, on the part of an evaluation device external to the vehicle,
- wherein when sending the collected operational data of the respective vehicle component (12a, 12b, 12c) together with a specific identifier of the respective vehicle component (12a, 12b, 12c) to the evaluation device external to the vehicle, the component-identifier assigned to the respective vehicle component (12a, 12b, 12c) is used exclusively as the specific identifier, as well as the motor vehicle-identifier assigned to the motor vehicle.

2. Method according to claim 1, wherein the component-identifier of a respective vehicle component (12a, 12b, 12c) remains assigned unchanged to the respective vehicle component (12a, 12b, 12c) independently of a further start-up of the respective vehicle component (12a, 12b, 12c), particularly during a total lifetime of the respective vehicle component (12a, 12b, 12c).

3. Method according to any of the preceding claims, wherein the motor vehicle-identifier remains assigned unchanged to the motor vehicle (10) independently of a start-up of a further vehicle component (12a, 12b, 12c) and/or independently of a parking of the motor vehicle (10) and/or independently of a renewed start-up of the motor vehicle (10), in particular during a total lifetime of the motor vehicle (10).

4. Method according to any of claims 1 or 2, wherein the motor vehicle-identifier is generated anew with each first-time start-up of a further vehicle component (12a, 12b, 12c).

5. Method according to any of the preceding claims, wherein as a component behaviour an operating performance and/or an operating state and/or a usage pattern of the respective vehicle component (12a, 12b, 12c) of the motor vehicle (10) is determined.

6. Motor vehicle (10) having a vehicle component (12a, 12b, 12c) or a plurality of vehicle components (12a, 12b, 12c), wherein each vehicle component (12a, 12b, 12c) is configured
- to record a first-time start-up of the vehicle component (12a, 12b, 12c);
- to create a component-identifier which comprises a sequence of a predetermined number of characters, wherein the vehicle component (12a, 12b, 12c) has a random generator which is configured to generate each character of the component-identifier; and
- to record operational data of the vehicle component (12a, 12b, 12c) and to assign the recorded operational data to the component-identifier,
- wherein additionally the motor vehicle is configured, after the first-time start-up of the or one of the vehicle components (12a, 12b, 12c), to create in-vehicle a motor vehicle-identifier assigned to the motor vehicle (10), wherein the motor vehicle-identifier comprises a sequence of a predetermined number of characters, wherein each character is generated by a random generator;
- wherein the motor vehicle is furthermore configured
- to collect operational data of the respective vehicle component (12a, 12b, 12c) and to assign the collected operational data to the component-identifier assigned to the respective vehicle component (12a, 12b, 12c) (step S3), and
- to assign the collected operational data of each vehicle component (12a, 12b, 12c) of the motor vehicle (10) to the motor vehicle-identifier; and
- to send the collected operational data of the respective vehicle component (12a, 12b, 12c) together with a specific identifier of the respective vehicle component (12a, 12b, 12c) to an evaluation device external to the vehicle and, when sending, to use exclusively the component-identifier assigned to the respective vehicle component (12a, 12b, 12c) as the specific identifier as well as the motor vehicle-identifier assigned to the motor vehicle.

## Revendications

1. Procédé pour déterminer un comportement de composant d'au moins un composant de véhicule (12a, 12b, 12c) d'un véhicule automobile (10), comprenant les étapes suivantes :
- détection d'une première mise en service de l'au moins un composant de véhicule (12a, 12b, 12c) du véhicule automobile (10) (étape S1);
- après la détection de la première mise en service du composant de véhicule (12a, 12b, 12c) respectif : génération à l'intérieur du véhicule d'un repère de composant associé, dans lequel le repère de composant comprend une suite d'un nombre prédéterminé de symboles, dans lequel chaque symbole est généré au moyen d'un générateur aléatoire (étape S2) de même que dans une autre étape de procédé génération à l'intérieur du véhicule d'un repère de véhicule automobile associé au véhicule automobile (10), dans lequel le repère de véhicule automobile comprend une suite d'un nombre de symboles prédéterminé, dans lequel chaque symbole est généré par le biais d'un générateur aléatoire ;
- collecte à l'intérieur du véhicule de données d'exploitation du composant de véhicule (12a, 12b, 12c) respectif et association des données d'exploitation au repère de composant associé au composant de véhicule (12a, 12b 12c) respectif (étape S3)
- association des données d'exploitation collectées de chaque composant de véhicule (12a, 12b, 12c) du véhicule automobile (10) au repère de véhicule automobile ; et
- détermination du comportement de composant du composant de véhicule (12a, 12b, 12c) respectif sur la base des données d'exploitation associées au repère de composant respectif (étape S4) de même qu'en outre sur la base des données d'exploitation associées au repère de véhicule automobile respectif par le biais d'un appareil d'évaluation extérieur au véhicule,
- dans lequel lors d'un envoi des données d'exploitation collectées du composant de véhicule (12a, 12b, 12c) respectif conjointement avec un repère spécifique du composant de véhicule (12a, 12b, 12c) respectif à l'appareil d'évaluation extérieur au véhicule le repère de composant associé au composant de véhicule (12a, 12b, 12c) respectif est utilisé exclusivement en tant que repère spécifique de même que le repère de véhicule automobile associé au véhicule automobile est utilisé.

2. Procédé selon la revendication 1, dans lequel le repère de composant d'un composant de véhicule (12a, 12b, 12c) respectif reste associé indépendamment d'une autre mise en service du composant de véhicule (12a, 12b, 12c) respectif, en particulier par le biais d'une durée de vie globale du composant de véhicule (12a, 12b, 12c) respectif, de manière inchangée au composant de véhicule (12a, 12b, 12c) respectif.

3. Procédé selon l'une quelconque des revendications précédentes, dans lequel le repère de véhicule automobile reste associé indépendamment d'une mise en service d'un autre composant de véhicule (12a, 12b, 12c) et/ou indépendamment d'un arrêt du véhicule automobile (10) et/ou indépendamment d'une mise en service renouvelée du véhicule automobile (10), en particulier par le biais d'une durée de vie globale du véhicule automobile (10), de manière inchangée au véhicule automobile (10).

4. Procédé selon l'une quelconque des revendications 1 ou 2, dans lequel le repère de véhicule automobile est de nouveau généré avec chaque première mise en service d'un autre composant de véhicule (12a, 12b, 12c).

5. Procédé selon l'une quelconque des revendications précédentes, dans lequel une puissance d'exploitation et/ou un état d'exploitation et/ou un modèle d'utilisation du composant de véhicule (12a, 12b, 12c) respectif du véhicule automobile (10) sont déterminés en tant que comportement de composant.

6. Véhicule automobile (10) avec un composant de véhicule (12a, 12b, 12c) ou plusieurs composants de véhicule (12a, 12b, 12c), dans lequel chaque composant de véhicule (12a, 12b, 12c) est conçu pour
- détecter une première mise en service du composant de véhicule (12a, 12b, 12c) respectif ;
- générer un repère de composant qui comprend une suite d'un nombre prédéterminé de symboles, dans lequel le composant de véhicule (12a, 12b, 12c) présente un générateur aléatoire, qui est conçu pour produire chaque symbole du repère de composant ; et
- détecter des données d'exploitation du composant de véhicule (12a, 12b, 12c) et associer les données d'exploitation détectées au repère de composant,
- dans lequel le véhicule automobile est en outre conçu pour, après la première mise en service du ou d'un des composants de véhicule (12a, 12b, 12c) générer à l'intérieur du véhicule un repère de véhicule automobile associé au véhicule automobile (10), dans lequel le repère de véhicule automobile comprend une série d'un nombre prédéterminé de symboles, dans lequel chaque symbole est produit par le biais d'un générateur aléatoire ;
- dans lequel le véhicule automobile est en outre conçu pour
- collecter des données d'exploitation du composant de véhicule (12a, 12b, 12c) respectif et associer les données d'exploitation collectées au repère de composant associé au composant de véhicule (12a, 12b, 12c) respectif (étape S3), de même que
- associer les données d'exploitation collectées de chaque composant de véhicule (12a, 12b, 12c) du véhicule automobile (10) au repère de véhicule automobile ; et
- envoyer les données d'exploitation collectées du composant de véhicule (12a, 12b, 12c) respectif conjointement avec un repère spécifique du composant de véhicule (12a, 12b, 12c) respectif à un appareil d'évaluation extérieur au véhicule et lors de l'envoi utiliser uniquement le repère de composant associé au composant de véhicule (12a, 12b, 12c) respectif en tant que repère spécifique de même que le repère de véhicule automobile associé au véhicule automobile.
